# EUROPEAN PATENT APPLICATION

(11) **EP 1 044 933 A2**
(43) Date of publication of application: **18.10.2000**
(21) Application number: 00303146.5
(22) Date of filing: 14.04.2000
(51) Int. Cl.: C03C 17/25, C23C 16/40

(54) **Ingredient for metal oxide thin film and method for forming metal oxide thin film by using the same**

(30) Priority: 14.04.1999 JP 10638699
(71) Applicant: Nippon Sheet Glass Co., Ltd., Osaka-shi, Osaka (JP)
(72) Inventor: Otani, Tsuyoshi, c/o Nippon Sheet Glass Co., Osaka-shi, Osaka (JP); Yamamoto, Toru, c/o Nippon Sheet Glass Co., Osaka-shi, Osaka (JP)
(74) Representative: Matthews, Derek Peter

(57) **Abstract**

For forming metal oxide thin film containing cobalt upon a base plate of glass with high efficiency by means of a pyrolytic method, but without generating drawbacks such as white tarnish therein when baking and enameling color frit of colored ceramic, an ingredient is supplied upon the surface of a glass plate of high temperature, wherein the ingredient is obtained by dissolving an organic metal compound into an organic solvent, and the organic metal compound contains cobalt complex salt having a ligand of β-diketone with five carbons and a ligand of β-diketone with seven carbons, and further a concentration of cobalt metal in the solvent is equal to or more than 5 g/liter and is less than 30 g/liter.

## Description

### BACKGROUND OF THE INVENTION

### 1. FIELD OF THE INVENTION

The present invention relates to an ingredient for forming a metal oxide thin film upon a surface of a glass plate, and a method for forming a metal oxide thin film using the same.

### 2. DESCRIPTION OF PRIOR ART

Glass plates having metal oxide thin films upon the surfaces thereof are widely used, for example, in buildings, in cars and/or vehicles, and in electronic apparatuses, etc. In particular, the glass plate which is covered with a metal oxide thin film containing cobalt therein is used as solar heat reflecting glass, in the construction and automotive fields.

Metal oxide thin film containing cobalt is formed, generally, by a spray pyrolytic method, wherein a solution of organic solvent containing therein an organic metal compound, such as cobalt, is sprayed upon the surface of the glass plate being held at high temperature, so as to form the metal oxide thin film or layer through pyrolysis thereof.

Such a glass plate is well known, being manufactured for largely ornamental purposes, wherein a portion of the plate is treated with a color frit of colored ceramic, comprised of pigments and glass powder. As one example thereof, treatment of a periphery portion of a window glass plate, especially for use in an automobile (i.e., as a windshield), by baking a cover layer of the color frit of colored ceramic, creating a colored and opaque portion in belt-like design or various other forms thereof, so as to make terminals or sealant in the vicinity of the glass plate within the car invisible from the outside of the car, is known.

Normally, such a cover layer of ceramic color frit for use in the automobile is comprised of 10% - 30% heat-resistant pigment (normally being black or gray in color), 60% - 90% binder glass having a low melting point, and 0% - 25% fireproof filler having a low rate of thermal expansion (as in Japanese Laid-Open Patent No. Sho 56-5348 (1981)).

According to the popularly practiced method, for applying the color frit of colored ceramic upon the solar heat reflecting glass plate for use in the automobile, after mixing the powder mixture forming the above-mentioned color frit of colored ceramic into the organic solvent, such as pine oil or the like, to prepare a paste thereof, the mixed materials (paste) are applied on portions of the glass plate to be treated, through such a method as screen printing, etc. Since the physical and/or chemical durability of the coating of solar heat reflecting glass plate and color frit of colored ceramic is inferior to an ordinary glass plate, it is common that the color frit of colored ceramic is treated or provided upon the layer of the solar heat reflecting glass which is formed on the glass plate.

Next, after evaporating and decomposing the organic solvent contained within the paste, for drying up, the glass plate is further heated to a softening temperature thereof, and at the same time the color frit of colored ceramic is fused and burned onto the surface of the glass plate, in a process of reinforcing or curving of the glass plate. With this method, it is possible to simultaneously perform a heating process for reinforcement and/or curving of the glass plate and a heating process for fusing and burning the color frit of colored ceramic onto the glass plate as one step or process.

In the case of forming the layer or film of metal oxide containing cobalt therein as the solar heat reflecting glass layer, by spraying the solution of organic solvent having an organic metal compound dissolved therein upon the glass plate being held at a high temperature, there is predominantly used cobalt complex salt having a ligand of β-diketone with five carbons or a ligand of β-diketone with seven carbons as the cobalt compound, however the cobalt complex salt having the ligand of β-diketone with five carbons shows an inferior solubility into the organic solvent, and this limits the possible concentration thereof within the solution. The cobalt complex salt having the ligand of β-diketone with seven carbons shows a good solubility into the organic solvent, however its use brings about a drawback of showing an inferior efficiency in forming the film therefrom due to an inferior thermal decomposability thereof.

Also, when fusing the color frit of colored ceramic upon the film or layer of the solar heat reflecting glass containing the cobalt complex salt mentioned above therein, a problem is often brought about wherein drawbacks such as white tarnish are generated on or in the solar heat reflecting film or layer.

### SUMMARY OF THE INVENTION

For solving such problems or drawbacks as mentioned in the above, according to the present invention there is provided an ingredient for a metal oxide thin film, comprising an organic metal compound, for dissolving into an organic solvent, wherein said organic metal compound contains cobalt complex salt having a ligand of β-diketone with five carbons and a ligand of β-diketone with seven carbons therein, and a metal concentration of cobalt in the solvent is equal to or more than 5 g/liter and is less than 30 g/liter.

Further, according to the present invention, there is provided a method for forming a metal oxide thin film, comprising the following steps: spraying or supplying the ingredient for a metal oxide thin film as defined in the above upon a surface of a glass plate; and forming a metal oxide thin film containing cobalt therein by means of a pyrolytic method.

According to the present invention, it is possible to manufacture or form the metal oxide thin film (i.e., solar heat reflecting film) with good productivity, as well as to suppress the generation of drawbacks such as white tarnish which could be found when fusing color frit of colored ceramic onto the solar heat reflecting film.

The inventors of the present invention found that, in the solution comprising an organic metal compound dissolved into the organic solvent, the solubility into the organic solvent can be improved when it includes the cobalt complex salt having β-diketone with five carbons and β-diketone with seven carbons as the ligand thereof, and that the efficiency of the method used for forming the film can also be improved, by spraying such the solution upon the surface of the glass plate while the glass plate is being held at a high temperature.

The method of applying the metal complex salt having the β-diketone with five carbons and β-diketone with six to eight carbons as the ligant thereof was already proposed in Japanese Laid-Open Patent No. Sho 56-109842 (1981), however the invention described therein is aimed to suppress unevenness of the film of metal oxide. With this method, the metal concentration of cobalt within the solution is set to be equal to or more than 30 g/liter, therefore it is possible to reduce the amount of liquid to be supplied, due to high concentration of the metal complex salt therein, however there can be found or acknowledged no improvement in the efficiency of forming or producing the film per an amount of metal supplied.

According to the present invention, it is found that the efficiency in forming the film comes to be superior to that of prior methods, in particular when applying the compound of cobalt complex salt having the β-diketone with five carbons and β-diketone with seven carbons as the ligant thereof, and when the metal concentration of cobalt within the solution is equal to or more than 5 g/liter and is less than 30 g/liter.

Any among β-diketones can be applied provided that the carbon number thereof is same. In particular, preferable as the β-diketone with five carbons is acetyl acetone, and preferable as the β-diketone with seven carbons is dipropionyl methane.

Though there is no necessity for restricting the organic solvent to specific ones, it is however preferable to apply one kind or a mixture of solvents, including solvents of a lower fatty alcohol group, such as methanol, ethanol, isopropanol, etc., solvents of a ketone group, such as acetone, methyl ethyl ketone, etc., solvents of a lower fatty carboxylic acid ester group, such as ethyl acetate, butyl acetate, etc., solvents of a fatty hydrocarbon group, such as heptane, etc., solvents of an aromatic hydrocarbon group, such as benzene, toluene, xylene, etc., solvents of a halogenated fatty hydrocarbon group, such as dichloromethane, etc., or dimethylformamide, etc.

If the concentration of the cobalt complex salt within the solution is low, for example being less than 5 g/liter, a large amount of the liquid is necessary for obtaining a predetermined thickness of the film, therefore the efficiency in forming the film per an amount of metal supplied is lessened. If the concentration is equal to or more than 30 g/liter, this results in the use of a small amount of the liquid, however a drop can be found in the efficiency in forming the film per an amount of metal supplied, since the β-diketone with seven carbons having good solubility is increased in the amount thereof, in the place of the (β-diketone with five carbons having bad solubility, and a large number of drawbacks such as white tarnish are generated on the solar heat reflecting film when fusing the color frit of colored ceramic thereon. Accordingly, it is necessary that the concentration of the cobalt complex salt in the solution be equal to or more than 5 g/liter and be less than 30 g/liter. More preferably, it should be equal to or more than 10 g/liter and be equal to or less than 25 g/liter from a viewpoint of improving the efficiency in forming the film.

To the solution including the cobalt complex salt may be further added an organic compound such as nickel, iron, chromium, silicon, aluminum, titanium, zinc, tin, copper, indium, bismuth, vanadium, manganese, zirconium, etc. It may be added to the metal oxide thin film produced by using the above-described solution. In particular, by adding iron and chromium, the metal oxide thin film can be obtained being superior in performance of reflection of solar heat and superior in appearance thereof.

A ratio of cobalt to the metal contained in the solution may be any value, however it is preferable that the percentage by weight of cobalt within the total amount of metal contained within a unit of volume of the solution be equal to or more than 40%, and further it is preferable that it lies within the following range, including the percentage by weight of iron and chromium:
cobalt: equal to or more than 60% and equal to or less than 96%;
iron: equal to or more than 2% and equal to or less than 40%; and
chromium: equal to or more than 2% and equal to or less than 35%.

As a ratio of cobalt to the metal contained in the metal oxide thin film produced by using the solution, it is preferable that the percentage by weight of cobalt within the total amount of metal contained within a unit of volume of the film be equal to or more than 50%, and further it is preferable that it lies within the following range, including the percentage by weight of iron and chromium:
cobalt: equal to or more than 65% and equal to or less than 96%;
iron: equal to or more than 2% and equal to or less than 33%; and
chromium: equal to or more than 2% and equal to or less than 25%.

Forming the metal oxide thin film by applying such the solution being within the range of constituent proportions detailed above and by spraying it upon the glass plate of high temperature, there can be achieved a remarkable improvement in the efficiency of forming of the film. The metal oxide thin film concordant with the constituent ranges mentioned in the above was already proposed in the Japanese Laid-Open Patent No. Hei 9-30837 (1997). It is noted that the properties of the solar heat reflecting glass plate to which the metal oxide thin film is applied are found to be difficult to change or alter. The permeability or transmission coefficient thereof, for example, remains stable even after treatment with a heating process, such as in the process for the reinforcement thereof.

Further, since the tarnish arises readily on the metal oxide thin film upon use of the heat reinforcement process, accompanying the heating thereof, in particular if the constituent percentage by weight of cobalt exceeds 90%, therefore it is preferable that the constituent percentage by weight of cobalt is set to be equal to or less than 90%, in particular when regarding external appearance as important.

Also, it is preferable that at least one of a group of conditions is satisfied, i.e., that the constituent percentage by weight of the iron is equal to or less than 10%; that the constituent percentage by weight of the chromium is equal to or less than 8%; and that the constituent percentage by weight of the chromium is equal to or more than 18%. If the condition comes out from the region, the durability of the metal oxide thin film against an acid and against an alkaline does not come to be good.

The thickness of the metal oxide thin film may take any one of the values thereof, however it is preferable that it lies within a range being equal to or more than 10 nm and equal to or less than 70 nm. When it comes to be less than 10 nm, the performance of solar heat reflecting is decreased, while it is not preferable for thickness to exceed 70 nm, from the view point of the external appearance, because of the ill influence of color generated due to reflection and interference.

There is no necessity for restricting the glass plate to any specific ones, however it may commonly be a soda-lime glass, for example. Also, the method for forming the metal oxide thin film through the pyrolytic method should not be restricted to any specific ones, however it is possible to best reduce the cost for forming or producing the film, if conducting the forming of the film in a ribbon-like strip or edge pattern upon the glass plate, which is manufactured by a float method, etc., under the condition of high temperature, in particular in the case of forming it by means of the spray pyrolytic method, since there is no necessity of conducting washing and heating of the glass plate.

### DETAILED DESCRIPTION OF PREFERRED EMBODIMENT(S)

Hereinafter, embodiments according to the present invention will be fully explained by referring to the attached drawings.

### (Example 1)

A base material is prepared by washing and drying a soda-lime glass plate of side dimensions 150 mm × 150 mm and of thickness 4 mm. Suspended by a hanging jig, this base material is held within an electric furnace set at 650 °C for five minutes, and after that it is removed therefrom, to then be sprayed with a solution, the solution containing complex salt being coordinated with cobalt having a valence of three (3) so that a ratio between acetyl acetone and dipropionyl methane comes to be 1:1, at 1.5 g of metal amount of cobalt per 100 ml of toluene, by using a spray gun of a commercially available variety, for about three (3) minutes under the condition of air pressure 1.5 kg/cm², air amount of 80 liter/min., and sustained flow amount of 100 ml/min.

Determining a total metal amount of this metal oxide per a unit of area by using a high frequency plasma emission spectroscopy, an efficiency of forming or producing the film is obtained from an area of coverage and the metal amount being sprayed thereupon. The result of this is shown in Table 1.

Also, an occurrence of drawbacks such as white tarnish on the metal oxide when fusing the color frit of black ceramic thereon is determined visually, and the result of this is also shown in Table 1. The color frit of black ceramic is fused on the glass plate, by painting a paste of black ceramic color frit shown in Table 2 onto it by means of a screen printing method and then holding it for 150 seconds within an electric furnace set at 700 °C and then removing it from the furnace to be cooled.

### (Example 2)

The metal oxide thin film is formed or produced in the same manner as that in Example 1, except for application of a solution, containing complex salt, being coordinated with cobalt having a valence of three (3) so that a ratio between acetyl acetone and dipropionyl methane comes to be 1:1, at 1.5 g of metal amount of cobalt, acetyl acetonate of iron of valence of three (3) at 0.1 g of metal amount of iron, and acetyl acetonate of chromium at 0.3 g of metal amount of chromium, dissolved into 100 ml of toluene, and then fusing the color frit of black ceramic onto this metal oxide thin film. The efficiency in forming the film and the occurrence of drawbacks such as white tarnish thereon by this method is also shown in Table 1.

### (Comparison 1)

The metal oxide thin film is formed or produced in the same manner as that in Example 1, except for application of a solution containing dipropionyl methane of cobalt having the valence of three (3) dissolved into 100 ml of toluene at 1.5 g of the metal amount of cobalt, and fusing the color frit of black ceramic onto this metal oxide thin film. The efficiency in forming the film and the occurrence of drawbacks such as white tarnish by this method is shown in Table 1.

### (Comparison 2)

The metal oxide thin film is formed or produced in the same manner as that in the example 2, except for application of a solution containing dipropionyl methane of cobalt having the valence of three (3) dissolved into 100 ml of toluene at 1.5 g of the metal amount of cobalt, and fusing the color frit of black ceramic on this metal oxide thin film. The efficiency in forming the film and the occurrence of drawbacks such as white tarnish by this method is shown in Table 1.

**Table 1**

| | Efficiency of film forming (%) | Tarnish |
|---|---|---|
| Example 1 | 10.8 | No |
| Example 2 | 10.9 | No |
| Comparison 1 | 9.0 | Present |
| Comparison 2 | 9.5 | Present |

Shown in Table 1, obtained results is showing that the efficiency of the forming of the film as in Example 1 is superior by 20% over Comparison 1, and that the efficiency of forming the film as in Example 2 is superior by 15% over comparison 2.

**Table 2**

| Components Contained | Constituent Amount of Components (% by weight) |
|---|---|
| borosilicate lead glass powder | 64 |
| pigment | 21 |
| pine oil | 15 |

### (Comparison 3)

Deposition occurs when producing or preparing a solution containing acetyl acetone of cobalt having the valence of three (3) dissolved into 100 ml of toluene at 1.5 g of metal amount of cobalt.

As is fully mentioned in the above, according to the present invention, it is possible to provide a solution for forming or producing the metal oxide thin film containing cobalt therein upon the surface of a base plate of glass through the pyrolytic method. Also, it is possible to form or produce the metal oxide thin film containing cobalt, without generating drawbacks such as white tarnish therein when baking and enameling the colored ceramic color frit. Thereby, it is possible to reduce the cost for forming or producing the metal oxide thin film.

## Claims

1. An ingredient for a metal oxide thin film, said ingredient being an organic metal compound dissolved into an organic solvent, wherein said organic metal compound contains cobalt complex salt having a ligand of β-diketone with five carbons and a ligand of β-diketone with seven carbons therein, and wherein a metal concentration of cobalt in the solvent is equal to or more than 5 g/liter and is less than 30 g/liter.

2. An ingredient as defined in Claim 1, wherein a constituent amount of the β-diketone with five carbons among the ligands of the cobalt complex salt is equal to or more than 30% and is equal to or less than 70%.

3. An ingredient as defined in Claim 1, wherein the β-diketone with five carbons is acetyl acetone and the β-diketone with seven carbons is dipropionyl methane.

4. An ingredient as defined in Claim 1, wherein said cobalt is in content equal to or more than 40% by weight based on the total metal weight per unit volume.

5. An ingredient as defined in Claim 1, wherein said organic metal compound contains compounds of cobalt, iron and chromium as main components thereof.

6. An ingredient as defined in Claim 5, wherein said cobalt, iron and chromium in weight percentage based on the total metal weight per unit volume are as follows, respectively:
cobalt: equal to or more than 60% and equal to or less than 96%;
iron: equal to or more than 2% and equal to or less than 40%; and
chromium: equal to or more than 2% and equal to or less than 35%.

7. A method for forming a metal oxide thin film, comprising the following steps:
supplying the ingredient for metal oxide thin film as defined in any one of Claims 1 to 6 upon the surface of a glass plate of high temperature; and
forming a thin film of metal oxide, containing the cobalt therein, by means of a pyrolytic method.

8. A method for forming a metal oxide thin film as defined in Claim 7, wherein said cobalt is in content equal to or more than 50% by weight based on the total metal weight per unit volume of said metal oxide thin film.

9. A method for forming a metal oxide thin film as defined in Claim 7, wherein said metal oxide thin film contains compounds of cobalt, iron and chromium as main components thereof.

10. A method for forming a metal oxide thin film as defined in Claim 9, wherein a thickness of said metal oxide thin film is equal to or more than 10 nm and is equal to or less than 70 nm, and said cobalt, iron and chromium in weight percentage based on the total metal weight per unit volume are as follows, respectively:
cobalt: equal to or more than 65% and equal to or less than 96%;
iron: equal to or more than 2% and equal to or less than 33%; and
chromium: equal to or more than 2% and equal to or less than 25%.

11. A method for forming a metal oxide thin film as defined in Claim 10, wherein said cobalt is in content equal to or less than 90% by weight based on the total metal weight per unit volume.

12. A method for forming a metal oxide thin film as defined in any one of Claims 10 and 11, wherein at least one of a group of conditions is satisfied, said group including: that said iron is in content equal to or less than 10% by weight based on the total metal weight per unit volume; that said chromium is in content equal to or less than 8% by weight based on the total metal weight per unit volume; and that said chromium is in content equal to or more than 18% by weight based on the total metal weight per unit volume.
